# EUROPEAN PATENT APPLICATION

(11) **EP 1 509 067 A2**
(43) Date of publication of application: **23.02.2005**
(21) Application number: 04254949.3
(22) Date of filing: 18.08.2004
(51) Int. Cl.: H05H 1/30, G01N 1/00

(54) **Vessel for pretreatment of elementary analysis, method for analysing elements, inductively coupled plasme torch and apparatus for elementary analysis**

(30) Priority: 20.08.2003 JP 2003207994
(71) Applicant: Shin-Etsu Chemical Co., Ltd., Chiyoda-ku, Tokyo 100-0004 (JP)
(72) Inventor: Kimura, Noboru, c/o Gunma Complex, Annaka-shi Gunma-ken (KP); Kuniya, Joji c/o Gunma Complex, Annaka-shi Gunma-ken (KP); Arai, Masataka, c/o Gunma Complex, Annaka-shi Gunma-ken (KP)
(74) Representative: Cooper, John

(57) **Abstract**

There is disclosed a vessel for pretreatment of elementary analysis wherein the vessel is a ceramic vessel produced by chemical vapor deposition (CVD) method. And there is disclosed an inductively coupled plasma torch that has at least an induction coil and a nozzle and is used in an apparatus for elementary analysis by ICP method, wherein the nozzle is a ceramic nozzle produced by CVD method. Thus, there can be provided a vessel for pretreatment of elementary analysis that excels in heat resistance and chemical resistance such as acid resistance, and has high purity. There can be also provided an inductively coupled plasma torch used in an apparatus for analysis by ICP method that enables accurate elementary analysis and excels in durability, and an apparatus for elementary analysis by ICP method having this.

## Description

### BACKGROUND OF THE INVENTION

### Field of the Invention

The present invention relates to a vessel for pretreatment of elementary analysis, a method for analyzing elements, an inductively coupled plasma torch and an apparatus for elementary analysis.

### Description of the Related Art

Electronic materials such as molding compounds and sealing materials for silicon substrates, which contain organic compound, silicon resin, bismuth oxide, antimony oxide or the like as a component, are widely used in device fabrication. It is known that impurities contained in these materials affect operation and performance of the devices. This affects a yield on the device fabrication and reliability on the products. Thus, in the fabrication process of devices, reduction of the amount of impurities contained in the materials is required. Particularly, as to semiconductor devices, reduction of impurities contained in the materials is strongly required accompanying recent increase of integration.

Therefore, it becomes important to analyze these materials used for device fabrication by a method of elementary analysis such as inductively coupled plasma method (hereinafter, there are some cases that it is referred as ICP method) and flameless atomic absorption spectrometry, and control the amount of impurities in the materials.

In the case of analysis by a method of elementary analysis such as the ICP method and the flameless atomic absorption spectrometry, there is a need to make a solution capable of analysis of a sample such as materials used in device fabrication. Particularly in the case of analyzing impurity elements in a sample, pretreatment for removing organic compound, silicon resin or the like that is a main component is generally performed.

For example, in order to remove a main component such as organic compound from a sample, conventionally pretreatment in which the sample was heated at high temperature over 700°C to be incinerated in a vessel made from platinum or quartz, and then it was transferred to a vessel made from polytetrafluoroethylene (PTFE) to be dissolved into nitric acid solution was performed. Subsequently elementary analysis was performed.

However, there have been problems described below in such a conventional pretreatment of elementary analysis.

A vessel made from quartz is superior in heat resistance but inferior in acid resistance, while a vessel made from PTFE superior in acid resistance but inferior in heat resistance. Therefore, conventionally there has been a need to utilize different vessels between heat treatment and acid dissolution treatment as described above. However, there have been problems that it takes long time to transfer a sample from a vessel to another and a risk of mix of impurities when transferring the sample is present. Especially in the case of pretreatment of the material containing plural components selected from organic compound, silicon resin, bismuth oxide, antimony oxide, etc., numerous vessels for pretreatment of elementary analysis must be used, and therefore there have been problems that a risk of mix of impurities highly increases and in addition, the process becomes complicated.

Further, a vessel for pretreatment of elementary analysis needs to wash thoroughly in order to adjust background of each analysis. Accordingly, in the case of using plural vessels in the pretreatment as conventional, there has been a problem that a large amount of labor and time is required for washing the vessels.

Furthermore, in the case of using a vessel made from platinum, there has been a problem that impurity elements existing in the vessel made from platinum mix with a sample for analysis so that the results of analysis scatter due to its effect and accurate elementary analysis can not be performed.

On the other hand, in elementary analysis after pretreatment, especially in elementary analysis by ICP method, there have been also problems described below.

Namely, in an apparatus for elementary analysis by ICP method, there has been a problem that if impurities from a nozzle of inductively coupled plasma torch mix during analysis, the results of analysis scatter due to its effect and accurate elementary analysis can not be surely performed.

Further, in an apparatus for elementary analysis by ICP method, a nozzle made from quartz is generally used as a nozzle of an inductively coupled plasma torch (e.g. see C. Vandecasteele et al., Japanese translation by H. Haraguchi et al., "Modern Methods for Trace Element Determination", pp.126-127, published 20 September 1995 by Maruzen Co., LTD.). However, if the nozzle is made from quartz, there has been a problem in durability because it is inferior in acid resistance. Particularly, if a nozzle of an inductively coupled plasma torch is made from quartz, there has been a problem of difficulty in accurate analysis of silicon element.

### SUMMARY OF THE INVENTION

The present invention was accomplished in view of the aforementioned circumstances, and its object is to provide a vessel for pretreatment of elementary analysis wherein the vessel excels in heat resistance and chemical resistance such as acid resistance as well as it has high purity, and provide a method for analyzing elements using this.

Moreover, the object of the present invention is to provide an inductively coupled plasma torch using in an apparatus for elementary analysis by ICP method wherein the inductively coupled plasma torch enables accurate elementary analysis as well as it excels in durability, and provide an apparatus for elementary analysis by ICP method having this.

The present invention has been made in order to solve such problems, and provides a vessel for pretreatment of elementary analysis wherein the vessel is a ceramic vessel produced by chemical vapor deposition (CVD) method.

As described above, if the vessel for pretreatment of elementary analysis is a ceramic vessel produced by chemical vapor deposition (CVD) method, the vessel has high purity. Therefore if it is used in pretreatment of elementary analysis, contamination due to the vessel hardly occurs and it is possible to accurately perform elementary analysis after pretreatment. Further, because the vessel excels in heat resistance and chemical resistance, it is possible to perform pretreatment including plural processes such as heat treatment and acid dissolution treatment using one vessel, not using plural vessels. Accordingly, a risk of mix of impurities when a sample is transferred from a vessel to another can be reduced. From this viewpoint, it is also advantageous to perform accurate elementary analysis. Moreover, time for transfer of the sample from one vessel to another, and time and labor for washing vessels can be reduced so that it has effects of cost reduction and rationalization of the process.

In this case, the ceramic vessel is preferably a vessel made from any one selected from the group consisting of AlN, SiC, SiN and pyrolytic boron nitride (PBN).

Such a ceramic vessel made from any one selected from the group consisting of AlN, SiC, SiN and pyrolytic boron nitride (PBN) especially excels in heat resistance and chemical resistance. As a result it excels in durability and has a long life.

Also, the present invention provides a method for analyzing elements, which comprises, at least, pretreatment of a sample including heat treatment process and acid dissolution treatment process, and subsequent elementary analysis of the sample, wherein the pretreatment is performed using the one vessel for pretreatment of elementary analysis according to the present invention as described above. And in this case, the sample can be organic compounds and/or silicon resin.

Since the vessel for pretreatment of elementary analysis of the present invention excels in heat resistance and acid resistance, there is no need to use plural vessels different between heat treatment process and acid dissolution treatment process as conventional, and therefore it is possible to perform pretreatment for analysis of a sample, for example organic compound, silicon resin or the like, with one vessel for pretreatment of elementary analysis. Consequently, compared with the case of performing pretreatment with different vessels between heat treatment process and acid dissolution treatment process as conventional, time for the processes can be drastically reduced and a risk of contamination by impurities can be lowered. Therefore, pretreatment of a sample such as organic compound and silicon resin can be rapidly performed and in addition, subsequent elementary analysis can be accurately performed.

Moreover, the present invention provides a method for analyzing elements, which comprises, at least, pretreatment of a sample including hydrobromic acid dissolving treatment process, bromide removal process by heating and evaporation and acid dissolving treatment process, and subsequent elementary analysis of the sample, wherein the pretreatment is performed using the one vessel for pretreatment of elementary analysis according to the present invention as described above. And in this case, the sample can be bismuth oxide and/or antimony oxide.

Since the vessel for pretreatment of elementary analysis of the present invention excels in heat resistance and chemical resistance, it is also preferably used in pretreatment including hydrobromic acid dissolving treatment process, bromide removal process by heating and evaporation and acid dissolving treatment process, which is pretreatment for analysis of a sample such as bismuth oxide and antimony oxide. Namely, it is possible to perform this pretreatment using one vessel, not using plural vessels different between processes. Consequently, compared with the case of performing pretreatment with plural different vessels, time for the processes can be drastically reduced and a risk of contamination by impurities can be lowered. Therefore, pretreatment of a sample such as bismuth oxide and antimony oxide can be rapidly performed and in addition, subsequent elementary analysis can be accurately performed.

In this case, the method of the elementary analysis can be inductively coupled plasma (ICP) method or flameless atomic absorption spectrometry.

The vessel for pretreatment of elementary analysis of the present invention is especially appropriate to use in pretreatment of elementary analysis by inductively coupled plasma (ICP) method or flameless atomic absorption spectrometry, and by performing pretreatment using this, elementary analysis with high sensitivity can be stably performed.

Further, the present invention provides an inductively coupled plasma torch, which has at least an induction coil and a nozzle and is used in an apparatus for elementary analysis by ICP method, wherein the nozzle is a ceramic nozzle produced by CVD method.

As described above, because the inductively coupled plasma torch whose nozzle is a ceramic nozzle produced by CVD method has high purity, there is little contamination due to the nozzle and it excels in durability. Consequently, if elementary analysis is performed using an apparatus for elementary analysis by ICP method having this inductively coupled plasma torch, accurate elementary analysis can be performed for a long time.

In this case, it is preferable that the ceramic nozzle is a nozzle made from any one selected from the group consisting of AlN, SiC, SiN and pyrolytic boron nitride (PBN).

In this manner, if the ceramic nozzle is a nozzle made from any one selected from the group consisting of AlN, SiC, SiN and pyrolytic boron nitride (PBN), it especially excels in heat resistance and chemical resistance. As a result, it excels in durability and has a long life.

Furthermore, there can be provided an apparatus for elementary analysis by ICP method having the inductively coupled plasma torch of the present invention as described above.

In this manner, the apparatus for elementary analysis by ICP method having the inductively coupled plasma torch of the present invention generates less contamination due to the inductively coupled plasma torch, and makes it possible to perform accurate elementary analysis surely.

As described above, according to the present invention, by using a ceramic vessel produced by CVD method as a vessel for pretreatment of elementary analysis, it is possible to cover disadvantages of low acid resistance of a vessel made from quartz and low heat resistance of a vessel made from PTFE, and perform pretreatment for elementary analysis of various inorganic and organic components and their mixture with one vessel. As a result, the reduction of complication and time of the processes in the pretreatment of a sample can be achieved, and accuracy of measurement can be improved.

Further, by using a ceramic nozzle produced by CVD method as a nozzle of an inductively coupled plasma torch used in an apparatus for elementary analysis by ICP method, accurate elementary analysis can be stably performed for a long time.

### Brief Explanation of the Drawings

Fig. 1 is a schematic view illustrating one example of the method for producing the vessel for pretreatment of elementary analysis of the present invention.
Fig. 2 is a schematic view illustrating one example of the inductively coupled plasma torch of the present invention.

### DETAILED DESCRIPTION OF THE PREFERRED EMBODIMENTS

Hereinafter embodiments of the present invention will be described in detail. However, the present invention is not limited thereto.

The vessel for pretreatment of elementary analysis of the present invention is a ceramic vessel produced by chemical vapor deposition (CVD) method.

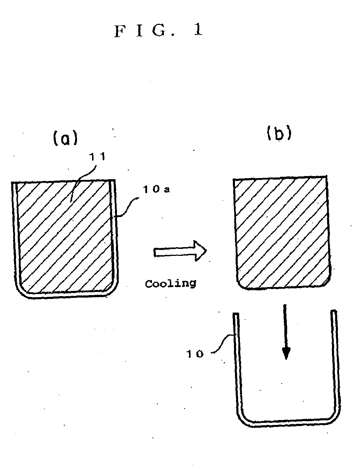

Such a vessel for pretreatment of elementary analysis is produced by a method, for example, shown in Fig. 1 below.

First, by CVD method, a ceramic layer 10a is deposited on a heat-resistant substrate 11 molded so as to obtain a vessel with desired shape, with evaporating ceramics. After evaporating reaction is finished, they are cooled down to room temperature and taken out of a furnace (see Fig. 1(a)).

During this cooling, a gap between the heat-resistant substrate 11 and the ceramic layer 10a is generated due to the difference of their coefficients of thermal expansion. By utilizing this gap, the ceramic layer 10a can be drawn to separate from the heat-resistant substrate 11. Thereby a ceramic vessel 10 can be obtained (see Fig. 1(b)).

As described above, by producing a vessel for pretreatment of elementary analysis by chemical vapor deposition (CVD) method, a ceramic vessel with high purity can be obtained. Accordingly, if this is used in pretreatment of elementary analysis, contamination of a sample from the vessel hardly occurs, and therefore it is possible to accurately perform elementary analysis after pretreatment. Moreover, because this vessel excels in heat resistance and chemical resistance, and can sufficiently withstand rapid heating and cooling, it is possible to perform pretreatment including plural processes such as heat treatment and acid dissolution treatment using one vessel, not using two or more vessels. Therefore, a risk of mix of impurities accompanying transfer of a sample from a vessel to another can be reduced. From this point of view as well, it is advantageous to perform accurate elementary analysis. Furthermore, time for transferring a sample from a vessel to another as well as time and labor for washing vessels can be reduced so that it has an effect of cost reduction.

As the ceramic vessel, for example, vessel made from AlN, SiC, SiN or pyrolytic boron nitride (PBN) can be mentioned. These vessels are preferable because they especially excel in heat resistance and chemical resistance, and they are superior in durability and have long life. In these vessels, a vessel made from AlN and a vessel made from PBN particularly excel in hydrofluoric acid resistance. Further, since these vessels contain no silicon element as a component and contamination from a vessel hardly occurs due to its high purity, analysis of trace silicon element that was conventionally difficult can be accurately performed by using these vessels.

And the present invention provides a method for analyzing elements as described below using the above-mentioned vessel for pretreatment of elementary analysis.

For example, in the case of analyzing impurity elements contained in a sample such as organic compounds and silicon resin, the present invention provides a method for analyzing elements, which comprises, at least, pretreatment of a sample including heat treatment process and acid dissolution treatment process, and subsequent elementary analysis of the sample, wherein the pretreatment is performed using the one vessel for pretreatment of elementary analysis of the present invention described above.

As described above, in case of analyzing impurity elements contained in a sample such as organic compounds and silicon resin, pretreatment including processes of heat treatment and acid dissolution treatment is performed to obtain a solution (a sample for measurement) from which organic compounds or silicon resin are removed, and then analysis of impurity elements is performed. Specifically, in case of organic compounds, organic compound is removed by heating in an electric furnace etc. after sulfuric acid decomposition, and afterward nitric acid etc. is added to obtain a solution. In case of silicon resin, silicon resin is removed by heating after adding hydrofluoric acid, and afterward nitric acid etc. is added to obtain a solution.

Because the vessel for pretreatment of elementary analysis of the present invention excels in heat resistance and acid resistance, there is no need to use plural vessels different between heat treatment process and acid dissolution treatment process as conventional, and therefore pretreatment can be performed using one vessel for pretreatment of elementary analysis. Accordingly, compared with the case where pretreatment is performed using vessels different between heat treatment process and acid dissolution treatment process as conventional, time for the processes can be drastically reduced and a risk of mix of impurities can be lowered. Therefore, it is possible to rapidly perform pretreatment, and moreover accurately perform subsequent elementary analysis.

Further, for example, in case of analyzing impurity elements contained in a sample such as bismuth oxide and/or antimony oxide, the present invention provides a method for analyzing elements, which comprises, at least, pretreatment of a sample including hydrobromic acid dissolving treatment process, bromide removal process by heating and evaporation and acid dissolving treatment process, and subsequent elementary analysis of the sample, wherein the pretreatment is performed using the one vessel for pretreatment of elementary analysis according to the present invention described above.

As described above, after a sample is subjected to pretreatment including hydrobromic acid dissolving treatment process, bromide removal process by heating and evaporation and acid dissolving treatment process to obtain a solution (a sample for measurement) from which bismuth oxide or antimony oxide are removed, analysis of impurity elements is performed.

Since the vessel for pretreatment of elementary analysis of the present invention excels in heat resistance and chemical resistance, it is also preferably used in such pretreatment. Namely, it is possible to perform the pretreatment using one vessel, not using plural vessels different between processes. Accordingly, compared with the case that pretreatment is performed using plural different vessels, time for the processes can be drastically reduced and a risk of mix of impurities can be lowered. Therefore, it is possible to rapidly perform pretreatment, and moreover accurately perform subsequent elementary analysis.

Herein, there are many cases that materials using in the process of manufacturing device etc. contain a mixture of a sample such as organic compounds and silicon resin and a sample such as bismuth oxide and antimony oxide. The vessel for pretreatment of elementary analysis of the present invention is especially effective for analysis of a sample containing a mixture of samples that are subjected to different pretreatment respectively as described above. Namely, to analyze impurity elements contained in materials for a device etc., pretreatment for obtaining a solution (a sample for measurement) from which organic compounds, silicon resin, bismuth oxide, antimony oxide and so forth are removed can be performed with one vessel for pretreatment of elementary analysis. Therefore, a risk of mix of impurities can be reduced and in addition, the efficiency of labor can be considerably improved.

Further, for pretreatment of elementary analysis by inductively coupled plasma (ICP) method or flameless atomic absorption spectrometry, the vessel for pretreatment of elementary analysis of the present invention that has heat resistance and chemical resistance and is of high degree of purity, is especially appropriate. By performing pretreatment using this, elementary analysis with high sensitivity can be stably performed.

Furthermore, the present invention provides an inductively coupled plasma torch, which has at least an induction coil and a nozzle and is used in an apparatus for elementary analysis by ICP method, wherein the nozzle is a ceramic nozzle produced by CVD method.

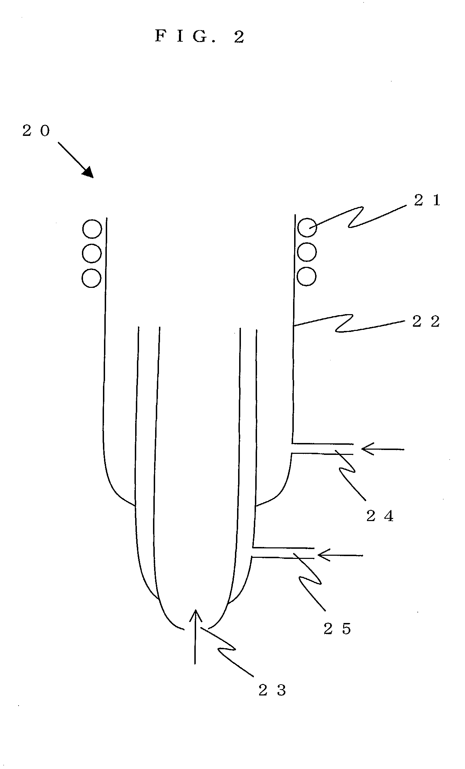

An example of such an inductively coupled plasma torch will be explained in reference to Fig. 2.

This inductively coupled plasma torch 20 has a structure in which an induction coil 21 is bound around a ceramic nozzle 22 of multi-tube structure produced by CVD method. And this ceramic nozzle 22 comprises a plasma gas inlet 25, an auxiliary gas inlet 24 and an inlet for a sample for measurement 23.

This inductively coupled plasma torch is explained citing a case of using it in an apparatus of inductively coupled plasma mass spectrometry (ICP-MS). When electricity flows through the induction coil 21, inducted electric field occurs. When plasma gas such as argon gas is introduced herein through the plasma gas inlet 25, atoms of the introduced plasma gas are ionized to be plasma state. When an atomized sample for measurement is introduced into the central portion of the plasma by carrier gas through the inlet for a sample for measurement 23, a mist of the sample for measurement is excited by thermal energy to be ionized. After that, using a system not shown, ions are converged in a vacuum and quantification of the sample for measurement is performed by mass separation.

As described above, since the inductively coupled plasma torch whose nozzle is a ceramic nozzle produced by CVD method has high purity, there is little contamination due to the nozzle. Further, since it excels in heat resistance and acid resistance, it also excels in durability. Accordingly, if elementary analysis is performed using an apparatus for elementary analysis by ICP method having this inductively coupled plasma torch, it is possible to perform accurate elementary analysis for a long time.

Particularly, if the ceramic nozzle is a nozzle made from any one selected the group consisting of AlN, SiC, SiN and pyrolytic boron nitride (PBN), it especially excels in heat resistance and chemical resistance. As a result it excels in durability. In this group, a nozzle made from AlN and a nozzle made from PBN enable analysis of silicon atoms with high accuracy that was difficult in the case of using a conventional nozzle made from quartz.

As described above, an apparatus for elementary analysis by ICP method having the above-mentioned inductively coupled plasma torch of the present invention diminishes contamination due to the inductively coupled plasma torch, and makes it possible to perform accurate elementary analysis surely and stably for a long time.

By using a nozzle made from PBN with a diameter of 20 mm as a nozzle of an inductively coupled plasma torch for an apparatus for elementary analysis by ICP method, a solution containing silicon element as impurities can be measured to the level of 1 ppb.

It will be seen that the nozzle is extremely useful in comparison with the case that accurate analysis of silicon element is difficult using a conventional nozzle made from quartz.

### Examples

Hereinafter, the present invention will be explained specifically in reference to the examples below.

### (Example 1)

Elementary analysis of molding compound was performed.

Before the elementary analysis, pretreatment described below was performed.

First, 1 g of molding compound as a sample was put into a vessel made from PBN having a capacity of 20 ml, and is decomposed by 0.5 ml of sulfuric acid on a heater. Then it was heated to 700°C in an electric furnace to be incinerated. Hydrofluoric acid and hydrobromic acid was added into the vessel to dissolve the sample. The solution was heated on a heater to remove oxides of silicon and antimony from residues by volatilization. Then a small amount of nitric acid was added into the vessel to dissolve the residues, and the residues were recovered. The solution was made to be a constant volume of 2 ml, and a sample for measurement was obtained.

After above-mentioned pretreatment, elementary analysis was performed.

As a result, compared with the values obtained when a vessel made from quartz and a vessel made from PTFE were used for pretreatment, the values obtained were 74% of Th and 91% of U, and the standard deviations of the values were both below several percent. Therefore it could be found that dispersion of the values was small.

Further, it took about 2 hours for the pretreatment. Thus time for pretreatment could be drastically reduced in comparison with the case that it took 4 hours when a conventional vessel made from quartz and a vessel made from PTFE were used.

### (Example 2)

Elementary analysis of alkylaminosilane was performed.

Before the elementary analysis, pretreatment described below was performed.

First, 2.0 g of alkylaminosilane as a sample was put into a vessel made from PBN having a capacity of 20 ml, and the sample was subjected to mild heating with a heater to be volatilized. Nitric acid and hydrofluoric acid of 1.5 ml respectively were added into the vessel to remove remained silicide, and residue in the vessel was dried. After dryness, the vessel was taken off from the heater, and nitric acid of 0.05 ml and water of 0.95 ml were added in several batches to dissolve the residue. After adding 0.020 ml of diluted nitric acid containing 10 ppm of strontium of internal standard and mixing, a solution in the vessel was recovered and filtered through a membrane filter of 0.45 um. And a sample for measurement was obtained.

After above-mentioned pretreatment, elementary analysis was performed.

As a result of the analysis, recovery rates of fourteen elements (Al, Ca, Cr, Cu, Fe, Mg, Mn, Ni, Zn, Pb, Na, K, Li and Co) of standard addition were 90 - 109%, and their standard deviations were all below several percent. Therefore it could be found that dispersion of the values was small.

Incidentally, because a vessel made from quartz is inferior in hydrofluoric acid resistance and a vessel made from PTFE is inferior in heat resistance, this pretreatment can not be performed using the vessel made from quartz and the vessel made from PTFE. Further, a vessel made from platinum has possibility of contamination of metal and therefore it is not preferable for accurate elementary analysis.

### (Example 3)

Elementary analysis was performed using siloxane compound containing amino groups.

Before the elementary analysis, pretreatment described below was performed.

5.0 g of a solution of siloxane compound containing amino groups as a sample was put into a vessel made from PBN having a capacity of 20 ml, and hydrofluoric acid was added. It was heated mildly with a heater to remove excess hydrofluoric acid and water as a main component by volatilization. Subsequently it was heated hard to volatilize siloxane containing amino groups that had become salt of fluoride. In this treatment, siloxane compound disappeared from the vessel of PBN as white smoke.

The vessel was cooled down to room temperature and 1 ml in total of nitric acid and water was added.

The solution was recovered and filtered through a membrane filter of 0.45 um. And a sample for measurement was obtained.

After above-mentioned pretreatment, elementary analysis was performed.

As a result of the analysis, in fourteen elements (Al, Ca, Cr, Cu, Fe, Mg, Mn, Ni, Zn, Pb, Na, K, Li and Co) of standard addition, recovery rates of Cu, Pb, Co and Cr were below 30%, that of Ni was 50% and those of other elements were 60 - 80%. Their standard deviations were all below several percent. Therefore it could be found that dispersion of the values was small.

Incidentally, because a vessel made from quartz is inferior in hydrofluoric acid resistance and a vessel made from PTFE is inferior in heat resistance, this pretreatment can not be performed by using the vessel made from quartz and the vessel made from PTFE. Further, a vessel made from platinum has possibility of contamination of metal and therefore it is not preferable for accurate elementary analysis.

### (Example 4)

Elementary analysis was performed using bismuth oxide and antimony oxide.

Before the elementary analysis, pretreatment described below was performed.

First, 1 - 1.5 g of powder of bismuth oxide and antimony oxide as a sample was dissolved into hydrobromic acid of 7 ml in a vessel made from PBN having a capacity of 20 ml. Subsequently the solution was inspissated to be about 2 ml and the vessel was put onto a heater. After a vessel made from PBN was covered with a vessel made from quartz downside up, they were heated by the heater, and fluoride as a main component was recovered on an inner wall of the vessel made from quartz. A small amount of nitric acid was added into the vessel made from PBN and boiled. Thereby, elements remained in the vessel made from PBN were recovered.

After the above-mentioned pretreatment, elementary analysis was performed.

As a result, the average recovery rates of Al, Ca, Mg, Si and Fe of 10 - 300 ppm that had been added into bismuth oxide when the sample was dissolved were 95 - 104%, and those of Th and U of 0.3 - 10 ppb that had been added into antimony oxide were 70% and 90%, respectively. Their standard deviations were all below several percent. Therefore it could be found that dispersion of the values was small.

Further, it took about 1 hour for the pretreatment. Thus it would be found that time for pretreatment could be drastically reduced in comparison with the case that it took 4 hours when a vessel made from quartz and a vessel made from PTFE were used as conventional.

The present invention is not limited to the embodiments described above. The above-described embodiments are mere examples and those having substantially the same structure as technical ideas described in the appended claims and providing the similar functions and advantages are included in the scope of the present invention.

For example, although cases of using a vessel made from PBN as a vessel for pretreatment of elementary analysis are explained in the Examples above, the present invention is not limited thereto. For example, a ceramic vessel made from AlN, SiC or SiN produced by CVD method may be used.

## Claims

1. A vessel for pretreatment of elementary analysis wherein the vessel is a ceramic vessel produced by chemical vapor deposition (CVD) method.

2. The vessel for pretreatment of elementary analysis according to Claim 1, wherein the ceramic vessel is a vessel made from any one selected from the group consisting of AlN, SiC, SiN and pyrolytic boron nitride (PBN).

3. A method for analyzing elements, which comprises, at least, pretreatment of a sample including heat treatment process and acid dissolution treatment process, and subsequent elementary analysis of the sample, wherein the pretreatment is performed using the one vessel for pretreatment of elementary analysis according to Claim 1 or 2.

4. The method for analyzing elements according to Claim 3 wherein the sample is organic compounds and/or silicon resin.

5. A method for analyzing elements, which comprises, at least, pretreatment of a sample including hydrobromic acid dissolving treatment process, bromide removal process by heating and evaporation and acid dissolving treatment process, and subsequent elementary analysis of the sample, wherein the pretreatment is performed using the one vessel for pretreatment of elementary analysis according to Claim 1 or 2.

6. The method for analyzing elements according to Claim 5 wherein the sample is bismuth oxide and/or antimony oxide.

7. The method for analyzing elements according to any one of Claims 3-6, wherein the method of the elementary analysis is inductively coupled plasma (ICP) method or flameless atomic absorption spectrometry.

8. An inductively coupled plasma torch, which has at least an induction coil and a nozzle and is used in an apparatus for elementary analysis by ICP method, wherein the nozzle is a ceramic nozzle produced by CVD method.

9. The inductively coupled plasma torch according to Claim 8, wherein the ceramic nozzle is a nozzle made from any one selected from the group consisting of AlN, SiC, SiN and pyrolytic boron nitride (PBN).

10. An apparatus for elementary analysis by ICP method having the inductively coupled plasma torch according to Claim 8 or 9.
